# EUROPEAN PATENT SPECIFICATION

(11) **EP 1 680 857 B1**
(45) Date of publication and mention of the grant of the patent: **28.02.2007**
(21) Application number: 04790349.7
(22) Date of filing: 13.10.2004
(51) Int. Cl.: H02K 21/24, H02K 1/14, H02K 29/08, H02K 3/52, H02K 11/04

(54) **ROTARY ELECTRIC MACHINE WITH PERMANENT-MAGNET ROTOR**
ELEKTRISCHE DREHMASCHINE MIT PERMANENTMAGNET-ROTOR
MACHINE ELECTRIQUE ROTATIVE EQUIPE D'UN ROTOR A AIMANT PERMANENT

(30) Priority: 14.10.2003 IT TO20030800
(43) Date of publication of application: 19.07.2006
(73) Proprietor: Emerson Appliance Motors Europe S.r.l., 10024 Moncalieri (IT)
(72) Inventor: ACQUAVIVA, Sebastiano, I-10025 Pino Torinese (Torino) (IT); CAPPELLETTI, Pierluigi, I-21040 Cislago (Varese) (IT); MORRA, Giorgio, I-14100 Asti (IT)
(74) Representative: Quinterno, Giuseppe
(86) International application number: PCT/EP2004/011476
(87) International publication number: WO 2005/041392

(56) References cited:
- DE-A- 4 306 327
- US-A- 5 808 390
- US-A1- 2002 149 285
- US-B1- 6 509 666
- PATENT ABSTRACTS OF JAPAN vol. 2002, no. 05, 3 May 2002 (2002-05-03) -& JP 2002 027722 A (MATSUSHITA ELECTRIC IND CO LTD), 25 January 2002 (2002-01-25)

## Description

The present invention relates to rotary electric machines with permanent-magnet rotors. A prior art machine is disclosed in US 2002 149 285.

An object of the present invention is to provide a rotary electric machine, in particular a direct-current motor which can be used for example in electric household appliances, having a structure which is extremely simple and can be produced at a very low cost.

This object, together with others, is achieved according to the invention by a rotary electric machine comprising:
a rotor with at least one permanent magnet, for producing a uniform annular distribution of magnetic polarities of angularly alternating sign about the axis of rotation of the rotor, within a magnetized surface lying in a plane essentially perpendicular to said axis, and
a stator including:
   a flow-conveying structure formed with a pressure-shaped mass of insulated ferromagnetic particles; said structure having a base portion from which first and second arms extend substantially parallel to the axis of the rotor, said arms being situated essentially at a first and a second radial distance, respectively, from said axis and angularly alternating with respect to each other; the ends of said first and second arms opposite to said base portion frontally facing said magnetized surface of the rotor from which they are separated by an air-gap; and
   a winding arranged coaxially with the rotor, in an annular region lying between said first and second arms of the flow-conveying structure.

Further characteristic features and advantages of the invention will emerge from the following detailed description provided purely by way of a non-limiting example with reference to the accompanying drawings in which:
Figure 1 is a side view of an electric motor designed in accordance with the present invention;
Figure 2 is a cross-sectional view along the line II-II in Figure 1;
Figure 3 is a perspective cross-sectional view of the electric motor according to Figures 1 and 2;
Figure 4 is a top plan view of part of the stator of the motor according to the preceding figures;
Figure 5 is a cross-sectional view along the line V-V in Figure 4;
Figure 6 is a top plan view of a flow-conveying structure included in a motor according to the invention;
Figure 7 is a cross-sectional view along the line VII-VII in Figure 6;
Figure 8 is a side view in the direction of the arrow VIII in Figure 6;
Figure 9 is a perspective view of the flow-conveying structure according to Figures 6 to 8;
Figure 10 is a bottom plan view of a bobbin for a winding of the electric motor according to the preceding figures;
Figure 11 is a view, on a larger scale, of a detail indicated by the arrow XI in Figure 10;
Figure 12 is a cross-sectional view along the line XII-XII in Figure 10;
Figure 13 is a view, on a large scale, of a detail indicated by XIII in Figure 12;
Figure 14 is a plan view of a printed-circuit board for the control components of a motor according to the preceding figures; and
Figure 15 is a perspective view of a permanent magnet for the rotor of a motor according to the preceding figures.

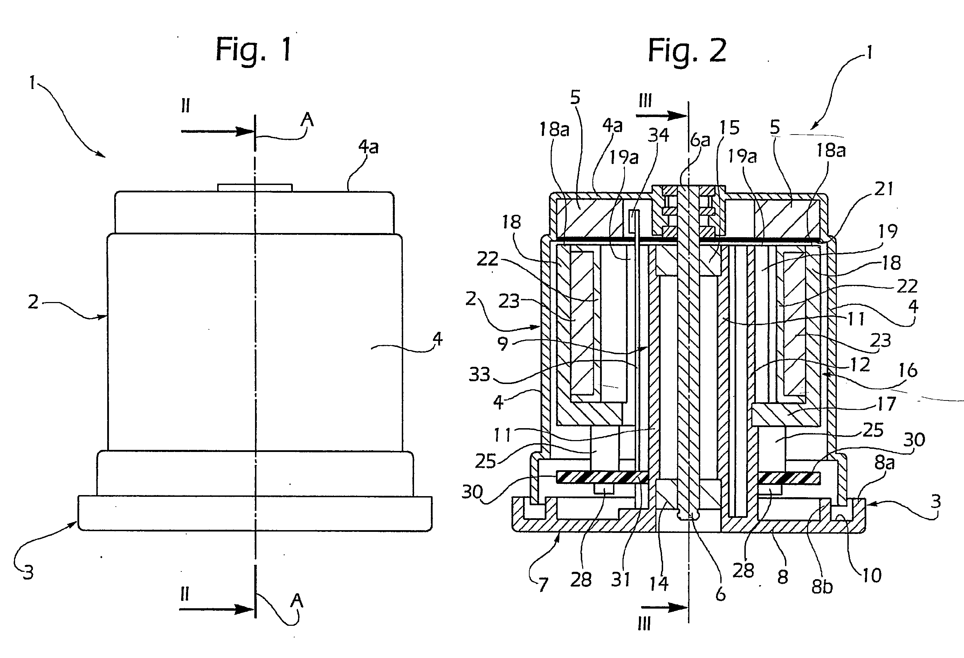

With reference to the drawings and in particular Figures 1 to 3, 1 denotes overall en electric motor designed in accordance with the present invention.

Although the description below refers to an embodiment of the electric machine according to the invention intended to operate as a motor, as is obvious for persons skilled in the art the description below is applicable, *mutatis mutandis,* to an embodiment of an electric machine according to the invention intended to operate as a generator.

With reference now to Figures 1 to 3, the motor 1 shown there is in particular a direct-current motor comprising a rotor denoted overall by 2 and a stator denoted overall by 3.

In the embodiment shown by way of example, the rotor 2 comprises a support body 4 essentially in the form of an overturned cup, to the end wall 4a of which an annular shaped permanent magnet 5 is fixed.

The rotor 2 also comprises a shaft 6 having one end 6a fixed coaxially inside the body 4 of the rotor. The shaft 6 is in particular mounted in a projecting manner in the central portion of the end wall 4a of said body 4.

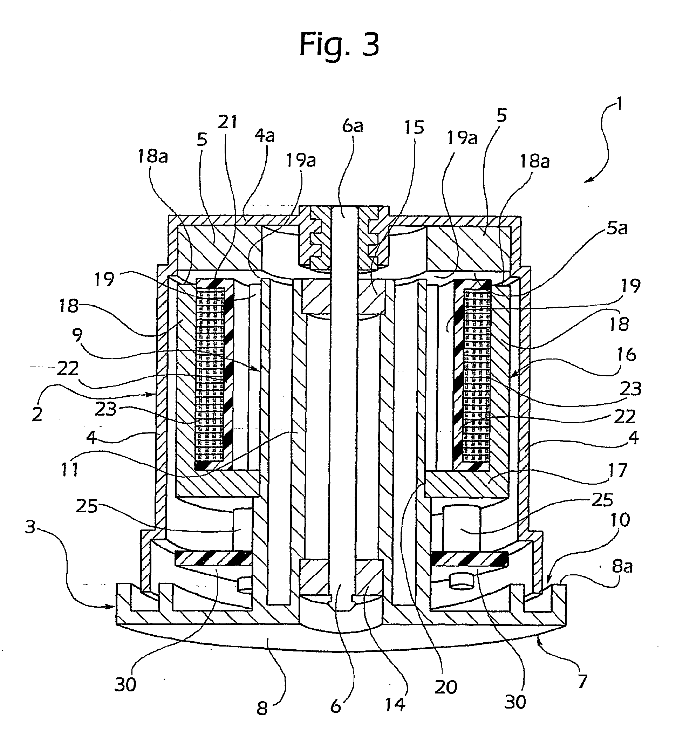

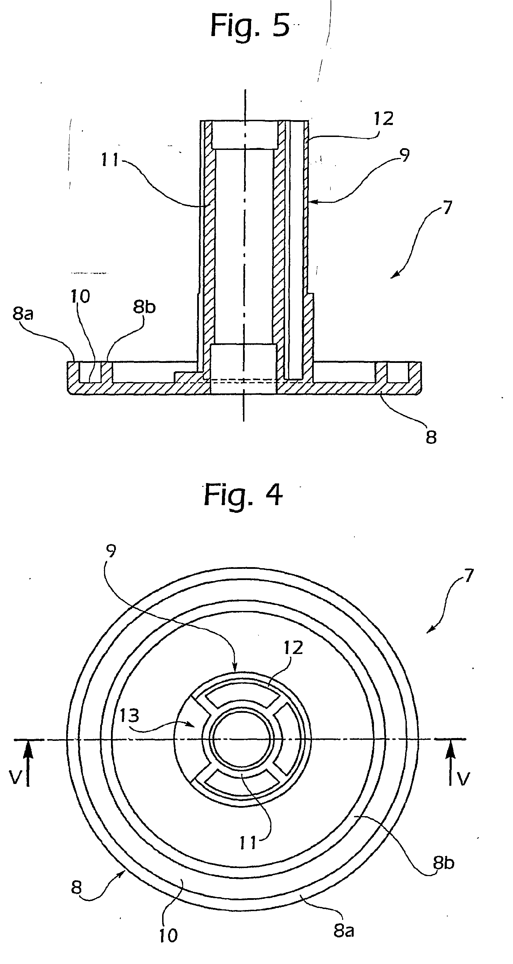

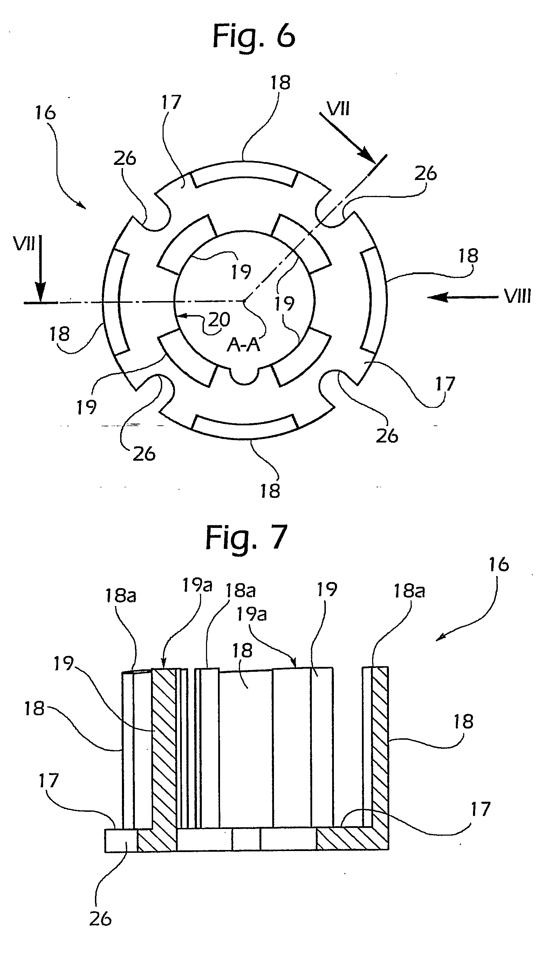

The stator 3 comprises a supporting structure which is denoted overall by 7 in Figures 2 and 3. This structure, which like the body 4 of the rotor may be made for example of moulded plastic, essentially comprises an end portion 8 from one side of which a stem portion denoted overall by 9 extends centrally (see also Figures 4 and 5).

In the embodiment shown, on the side directed towards the body 4 of the rotor, the end 8 of the supporting structure 7 of the stator has two coaxial annular shaped elements 8a, 8b, between which a groove 10 is defined, inside which groove the bottom terminal edge of the body 4 of the rotor extends with radial play.

The stem-like portion 9 of the supporting structure 7 of the stator comprises a cylindrical, tubular, inner wall 11 around which a further near-cylindrical wall 12 extends coaxially. In fact, the wall 12 forms a recess, denoted by 13 in Figure 4, having an angular extension which in the example illustrated is nearly 90°. This recess extends substantially over the whole length of the wall 12, as can be understood by considering Figure 4 in conjunction, for example, with Figure 5.

As can be seen in Figures 2 and 3, the shaft 6 of the rotor 2 extends coaxially on the inside of the tubular wall 11 of the supporting structure 7 of the stator and is rotationally supported there for example by means of two bushes 14 and 15.

A flow-conveying structure, denoted overall by 16 in Figures 2, 3 and 6 to 9, is mounted on the portion 9 of the supporting structure 7 of the stator 3.

The flow-conveying structure 16 is conveniently formed as one piece with a pressure-shaped mass of insulated ferromagnetic particles. This structure 16 has in particular a base portion 17 which, in the example shown, is essentially in the form of a planar ring, from one side of which two sets of lugs or arms extend upwards, substantially parallel to the axis A-A of the rotor and denoted by 18 and 19, respectively.

The base part 17 could also not necessarily be planar, but have the shape of a cup with an opening in its end wall.

As can be seen in particular in Figure 6, the arms 18 are more towards the outside, being situated at a same radial distance from the axis A-A, than the arms 19 which are instead situated at a same and smaller radial distance from this axis.

In the embodiment shown, the flow-conveying structure 16 has four radially outermost arms 18 which are angularly equidistant and extend by the same amount and four radially innermost arms 19 which are also angularly' equidistant and extend by the same amount.

As mentioned further above, the base part 17 of the flow-conveying structure 16 conveniently has an annular shape and the arms 18 extend flush with its external circumference, while the arms 19 extend essentially flush with the edge of its internal circular opening 20.

As can be seen more clearly in Figure 6, the inner arms 19 of the flow-conveying structure 16 are situated angularly alternating with the radially outermost arms 18.

Conveniently the arms 18 and 19 have substantially the same cross-sectional area.

The arms 18 and 19 may have a certain degree of angular overlap at their outer ends and the latter may also be suitably tapered and/or jointed so as to reduce the so-called "cogging torque".

The terminal surfaces 18a and 19a of the arms 18 and 19 of the structure 16, opposite to the base part 17, are situated frontally facing the surface 5a of the permanent magnet 5 of the rotor (Figures 2 and 3).

An air-gap 21 is defined between the terminal surfaces 18a and 19a of the arms 18 and 19 of the flow-conveying structure 16 of the stator and the flat annular surface 5a of the permanent magnet 5 (Figures 2 and 3).

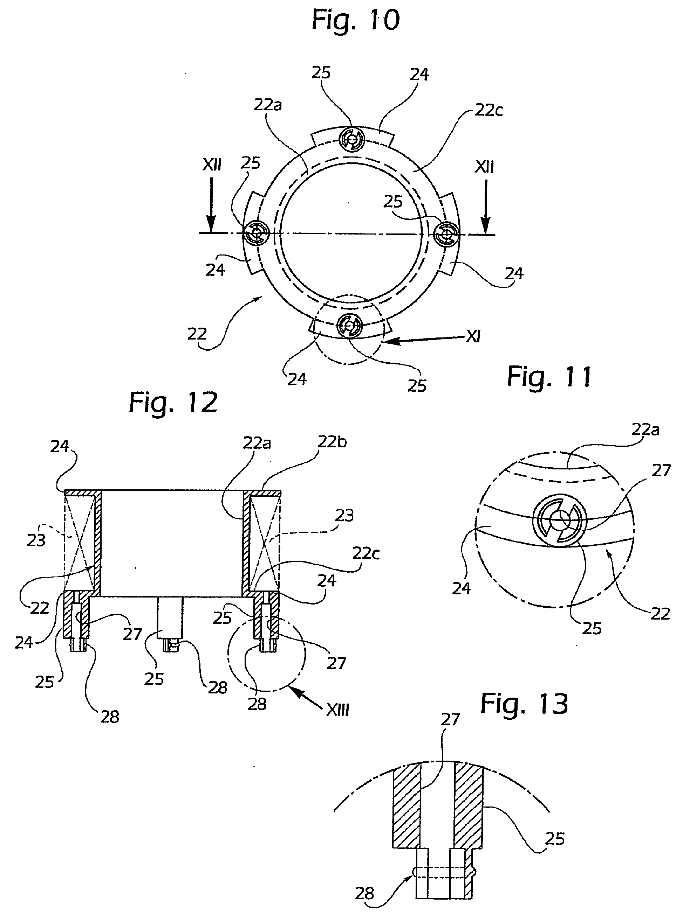

An annular region, inside which a bobbin 22 which supports a winding 23 of insulated electric wire is arranged, is defined between the radially outer arms 18 and the radially inner arms 19 in the flow-conveying structure 16. This bobbin is shown in particular in Figures 10 to 13 and comprises an intermediate tubular portion 22a provided with two annular end flanges 22b and 22c (Figures 10 and 12).

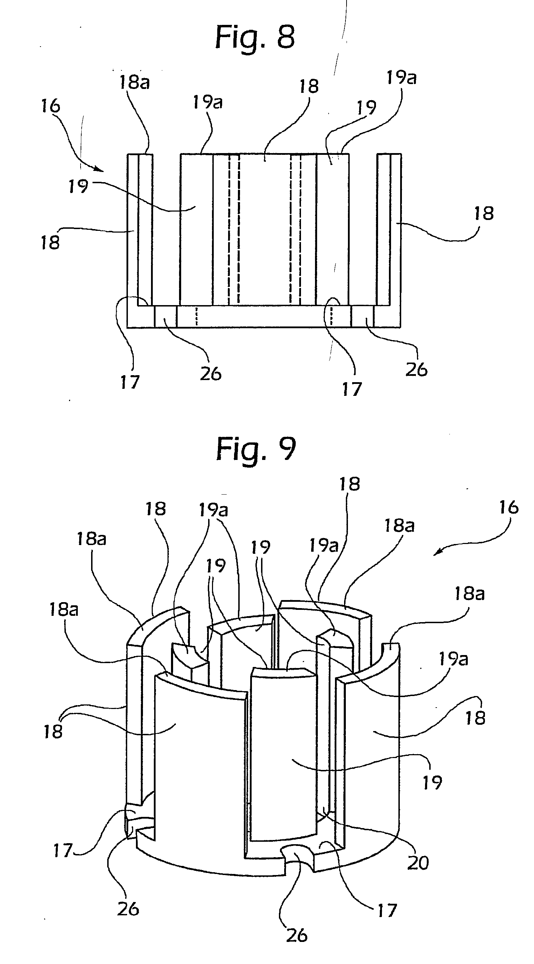

Conveniently the terminal surfaces 18a, 19a of the arms 18, 19 do not lie in a same transverse plane, but are slightly inclined, all in the same direction, as can be seen in particular in Figures 7 and 8. This results in an air-gap of cyclically variable amplitude and the possibility of determining a predefined angular rest position for the rotor 2 and ensuring the generation of a torque of predetermined magnitude upon start-up.

As can be seen in particular in Figure 10, the flanges 22b and 22c of the bobbin 22 have a shaped peripheral profile so that they are capable of engaging in the annular region between the outer arms 18 and the inner arms 19 of the flow-conveying structure 16. In particular, these flanges each have four radially projecting lugs 24 which are angularly equidistant and extend by the same amount and which engage in the interspaces between pairs of adjacent arms 18 of the flow-conveying structure 16.

With reference to Figure 12, respective studs 25 extend centrally from the radially projecting lugs 24 of the bottom flange 22c of the bobbin 22 (see also Figures 10, 11 and 13).

These studs 25 are parallel to each other and, in the assembled condition of the bobbin, extend through corresponding peripheral incisions 26 in the base part 17 of the flow-conveying structure 16 (see Figures 6 to 9).

The studs 25 have respective axial channels 27. The terminals of the winding 23 mounted on the bobbin 22 extend through the channels 27 of at least one pair of these studs. The studs 25 of the bobbin terminate in respective tapered elements 28 which engage through corresponding openings 29 of a printed circuit board 30 of essentially annular shape which extends around the stem portion 9 of the supporting structure 7 of the stator (Figures 2, 3 and 14).

In a manner not shown, the printed circuit board 30 houses components of circuits controlling the electric motor 1.

The lugs 28 of the studs 25 of the bobbin 22 extend through and beyond the openings 29 of the printed circuit board 30 and are fixed to this board, for example by means of hot-heading.

The terminals of the winding 23 mounted on the bobbin 22 pass through the channels 27 defined inside the studs 25 integral with said bobbin and are connected, for example by means of soldering, to the printed circuits housed on the board 30.

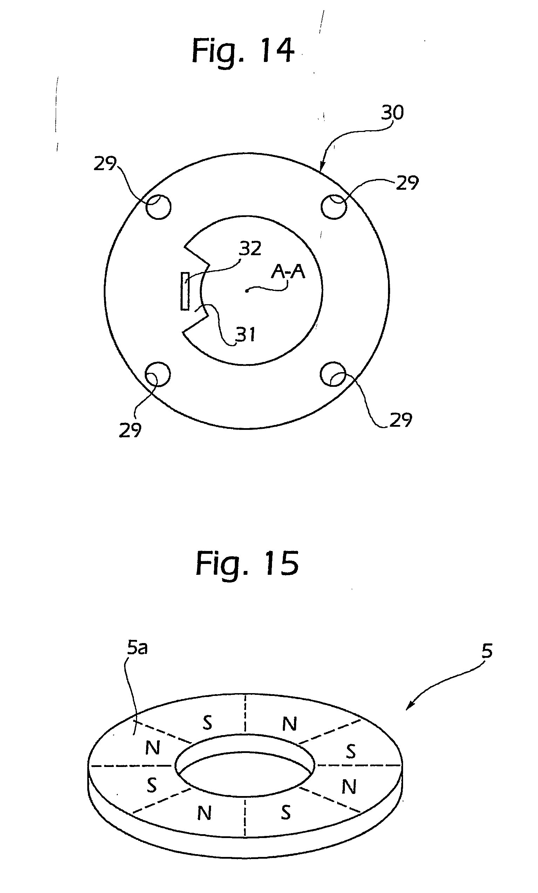

As can be seen in particular in Figure 14, the board 30 has a lug 31 which extends radially from its inner edge, towards the axis A-A of the rotor. This lug 31 is positioned inside the lateral recess 13 of the stem-like part 9 of the supporting structure 7 of the stator.

In the embodiment shown by way of example, the lug 31 of the board 30 is provided with an eyelet 32 inside which a support plate 33 of elongated shape is fixed (Figure 2), said plate extending parallel to the axis of the motor as far as the inside of the cavity of the annular permanent magnet 5. The end of the plate 33 facing the magnet 5 is provided with a sensor 34, for example of the Hall type. During operation, this sensor allows detection of the angular position of the rotor.

The plate 33 also has tracks for connecting the sensor 34 to the other components of the circuits housed on the printed circuit board 30.

Figure 15 shows one constructional form of the permanent magnet 5. This magnet is designed so that, at least on its flat side 5a facing the stator, it has a uniform distribution of magnetic poles N, S arranged angularly alternating about the axis of rotation of the rotor.

Preferably the number of magnetic poles produced by the magnet 5 on its surface 5a is equal to the overall number of outer arms 18 and inner arms 19 of the flow-conveying structure 16.

The arrangement is such in this case that, when the radially outermost arms 18 of the flow-conveying structure 16 with their end surfaces 18a face portions or segments of the permanent magnet 5 having the polarity N, the radially innermost arms 19 of said structure 16 with their end surfaces 19a face portions or segments of the magnet having a polarity S.

As can be understood from the above description, the present invention allows the design of rotary electric machines with an extremely simple and compact structure and with an extremely small number of parts. These machines can therefore be manufactured at a very low cost.

The invention may also be used for the production of direct-current or alternating-current electric motors as well as generators.

Without obviously modifying the principle of the invention, the embodiments and the constructional details may be greatly varied with respect to that described and illustrated purely by way of a non-limiting example, without thereby departing from the scope of the invention, as defined in the accompanying claims.

## Claims

1. Rotary electric machine (1) comprising:
a rotor (2) with at least one permanent magnet (5), for producing an annular distribution of magnetic polarities (N, S) of angularly alternating sign about the axis of rotation (A-A) of the rotor (2), within a magnetized surface (5) lying in a plane essentially perpendicular to said axis (A-A), and
a stator (3) including:
a flow-conveying structure (16) having an annular base portion (17) from which first and second arms (18; 19) extend substantially parallel to the axis of the rotor (A-A), said arms being situated essentially at a first and a second radial distance, respectively, from said axis (A-A) and angularly alternating with respect to each other; the ends (18a; 19a) of said first and second arms (18, 19) opposite to the base portion (17) frontally facing said magnetized surface (5a) of the rotor (5) from which they are separated by an air-gap (21); and
a winding (23) arranged coaxially with the rotor (2), in an annular region lying between said first and second arms (18; 19) of the flow-conveying structure (16);
**characterised in that** said flow-conveying structure (16) is formed as one piece with a pressure-shaped mass of insulated ferromagnetic particles, and **in that** the ends of said first and second arms (18, 19) thereof have terminal surfaces (18a, 19a) which are inclined all in a same direction with respect to a plane transverse to said axis (A-A).

2. Rotary electric machine according to Claim 1, in which the overall number of said first and second arms (18, 19) of the flow-conveying structure (16) is equal to the number of the magnetic polarities (N, S) produced on said surface (5a) of the rotor (5).

3. Electric machine according to Claim 1 or 2, in which said winding (23) is mounted on a bobbin (22) arranged in said annular region lying between the first and second arms (18; 19) of the flow-conveying structure (16).

4. Electric machine according to any one of the preceding claims, in which the outer arms (18) and the inner arms (19) of the flow-conveying structure (16) partially overlap in the angular direction.

5. Electric machine according to any one of the preceding claims, in which the outer and inner arms (18, 19) of the flow-conveying structure (16) have their respective end surfaces (18a, 19a) facing the permanent magnet (5) and inclined in the same sense in a circumferential direction coaxial with said magnet (5).

6. Electric machine according to any one of the preceding claims, also comprising a printed circuit board (30) housing circuits for controlling the operation of the machine (1) and fixed to lugs (25) integral with the bobbin (22) which supports the abovementioned winding (23).

7. Electric machine according to Claim 6, in which said printed circuit board (30) is arranged on the opposite side to the permanent magnet (5), relative to the flow conveying structure (16).

8. Electric machine according to Claim 7, in particular for operation as a motor, also comprising a sensor associated with the abovementioned permanent magnet (5) for providing during operation signals indicating the angular portion of the rotor (2), said sensor (34) being mounted on a support plate (3) connected to the abovementioned printed circuit board (30) and extending parallel to the axis (A-A) of the rotor (2) as far as a zone close to said magnet (5).

9. Electric machine according to any one of the preceding claims, in which the stator (3) comprises a supporting structure (7) including a tubular shaped element (9) coaxial with the axis of rotation of the rotor (2) and in which the rotor (2) comprises a shaft (6) which extends in a projecting manner inside the said tubular shaped element (9) of the supporting structure (7) of the stator (3), being rotationally supported there by at least one bush (14; 15) or similar support device.

## Patentansprüche

1. Elektrische Drehmaschine (1), umfassend:
einen Rotor (2) mit zumindest einem Permanentmagneten (5) zur Schaffung einer ringförmigen Verteilung von magnetischen Polaritäten (N, S) mit winkelförmig wechselnden Vorzeichen um die Drehachse (A-A) des Rotors (2) herum, und zwar innerhalb einer magnetisierten Fläche (5), die auf einer zur Achse (A-A) im Wesentlichen lotrechten Ebene liegt, und
einen Stator (3), umfassend:
eine strömungsübertragende Struktur (16) mit einem ringförmigen Grundabschnitt (17), aus dem sich erste und zweite Arme (18; 19) im Wesentlichen parallel zur Achse des Rotors (A-A) erstrecken, wobei die Arme im Wesentlichen in einem ersten bzw. zweiten radialen Abstand von der Achse (A-A) gelegen sind und sich winkelförmig miteinander abwechseln; wobei die Enden (18a; 19a) der ersten und zweiten Arme (18, 19), die dem Grundabschnitt (17) gegenüberliegen, der magnetisierten Fläche (5a) des Rotors (5) frontal gegenüberstehen, von welcher sie durch einen Luftspalt (21) getrennt sind; und
eine Wicklung (23), die koaxial zum Rotor (2) angeordnet ist, und zwar in einem zwischen den ersten und zweiten Armen (18; 19) der strömungsübertragenden Struktur (16) liegenden, ringförmigen Bereich;
**dadurch gekennzeichnet, dass** die strömungsübertragende Struktur (16) in einem Stück mit einer durch Druck geformten Masse von isolierten ferromagnetischen Partikeln gebildet ist und dass die Enden von deren ersten und zweiten Armen (18, 19) Endflächen (18a, 19a) aufweisen, die bezüglich einer quer zur Achse (A-A) liegenden Ebene alle in dieselbe Richtung geneigt sind.

2. Elektrische Drehmaschine gemäß Anspruch 1, wobei die Gesamtzahl der ersten und zweiten Arme (18, 19) der strömungsübertragenden Struktur (16) der Anzahl der an der Oberfläche (5a) des Rotors (5) gebildeten, magnetischen Polaritäten (N, S) entspricht.

3. Elektrische Maschine gemäß Anspruch 1 oder 2, wobei die Wicklung (23) an einer Spule (22) angebracht ist, welche in dem zwischen den ersten und zweiten Armen (18; 19) der strömungsübertragenden Struktur (16) liegenden, ringförmigen Bereich angeordnet ist.

4. Elektrische Maschine gemäß einem der vorhergehenden Ansprüche, wobei die äußeren Arme (18) und die inneren Arme (19) der strömungsübertragenden Struktur (16) in Winkelrichtung teilweise überlappen.

5. Elektrische Maschine gemäß einem der vorhergehenden Ansprüche, wobei die äußeren und inneren Arme (18, 19) der strömungsübertragenden Struktur (16) mit ihren jeweiligen Endflächen (18a, 19a) dem Permanentmagneten (5) zugewandt und in einer zum Magneten (5) koaxialen Umfangsrichtung in dieselbe Richtung geneigt sind.

6. Elektrische Maschine gemäß einem der vorhergehenden Ansprüche, welche ebenso eine gedruckte Schaltung (30) umfasst, die Schaltungen zum Steuern des Betriebs der Maschine (1) beherbergt und an Laschen (25) befestigt ist, die in der Spule (22) integriert sind, welche die obenstehend erwähnte Wicklung (23) trägt.

7. Elektrische Maschine gemäß Anspruch 6, wobei die gedruckte Schaltung (30) bezüglich der strömungsübertragenden Struktur (16) an der gegenüberliegenden Seite des Permanentmagneten (5) angeordnet ist.

8. Elektrische Maschine gemäß Anspruch 7, insbesondere für den Betrieb als Motor, welche ebenso einen dem obenstehend erwähnten Permanentmagneten (5) zugeordneten Sensor umfasst, um während des Betriebs Signale zu liefern, die den Winkelabschnitt des Rotors (2) anzeigen, wobei der Sensor (34) an einer Trägerplatte (3) angebracht ist, die mit der obenstehend erwähnten gedruckten Schaltung (30) verbunden ist und sich parallel zur Achse (A-A) des Rotors (2) erstreckt, und zwar bis zu einem Bereich in der Nähe des Magneten (5).

9. Elektrische Maschine gemäß einem der vorhergehenden Ansprüche, wobei der Stator (3) eine Stützstruktur (7) einschließlich eines zur Drehachse des Rotors (2) koaxialen, röhrenförmigen Elements (9) umfasst und wobei der Rotor (2) eine Welle (6) umfasst, die sich im Inneren des röhrenförmigen Elements (9) der Stützstruktur (7) des Stators (3) in vorspringender Weise erstreckt und dort von zumindest einer Buchse (14; 15) oder einer ähnlichen Stützvorrichtung drehbar gehalten wird.

## Revendications

1. Machine électrique tournante (1) comprenant :
un rotor (2) avec au moins un aimant permanent (5), pour produire une distribution annulaire de polarités magnétiques (N, S) d'un signe alternant angulairement autour de l'axe de rotation (A-A) du rotor (2), dans une surface magnétisée (5) reposant dans un plan essentiellement perpendiculaire audit axe (A-A), et
un stator (3) comprenant :
une structure de convoyage de flux (16) ayant une partie de base annulaire (17) depuis laquelle des premier et second bras (18; 19) s'étendent sensiblement parallèles à l'axe du rotor (A-A), lesdits bras étant situés essentiellement à une première et une seconde distance radiale, respectivement, dudit axe (A-A) et alternant angulairement l'un par rapport à l'autre; les extrémités (18a; 19a) desdits premier et second bras (18; 19) opposées à la partie de base (17) étant dirigées frontalement vers ladite surface magnétisée (5a) du rotor (5) de laquelle elles sont séparées par un entrefer (21) ; et
un enroulement (23) agencé coaxialement avec le rotor (2), dans une région annulaire reposant entre lesdits premier et second bras (18; 19) de la structure de convoyage de flux (16);
**caractérisée en ce que** ladite structure de convoyage de flux (16) est formée comme une pièce avec une masse formée par pression de particules ferromagnétiques isolées, et **en ce que** les extrémités desdits premier et second bras (18; 19) de celle-ci ont des surfaces d'extrémité (18a, 19a) qui sont inclinés toutes dans une même direction par rapport à un plan transversal au dit axe (A-A).

2. Machine électrique tournante selon la revendication 1, dans laquelle le nombre global desdits premier et second bras (18; 19) de la structure de convoyage de flux (16) est égal au nombre des polarités magnétiques (N, S) produites sur ladite surface (5a) du rotor (5).

3. Machine électrique selon la revendication 1 ou 2, dans laquelle ledit enroulement (23) est monté sur une bobine (22) agencée dans ladite région annulaire reposant entre les premier et second bras (18; 19) de la structure de convoyage de flux (16).

4. Machine électrique selon l'une quelconque des revendications précédentes, dans laquelle les bras extérieurs (18) et les bras intérieurs (19) de la structure de convoyage de flux (16) se recouvrent partiellement dans la direction angulaire.

5. Machine électrique selon l'une quelconque des revendications précédentes, dans laquelle les bras extérieur et intérieur (18, 19) de la structure de convoyage de flux (16) ont leurs surfaces d'extrémité respectives (18a, 19a) dirigées vers l'aimant permanent (5) et inclinée dans le même sens dans une direction circonférentielle coaxiale au dit aimant permanent (5).

6. Machine électrique selon l'une quelconque des revendications précédentes, comprenant en outre une carte de circuit imprimé (30) accueillant des circuits pour commander le fonctionnement de la machine (1) et fixée sur des pattes (25) intégrées à la bobine (22) qui supporte l'enroulement susmentionné (23).

7. Machine électrique selon la revendication 6, dans laquelle ladite carte de circuit imprimé (30) est agencée sur le côté opposé à l'aimant permanent (5), par rapport à la structure de convoyage de flux (16).

8. Machine électrique selon la revendication 7, en particulier pour fonctionner comme un moteur, comprenant aussi un capteur associé à l'aimant permanent (5) susmentionné pour fournir pendant l'opération des signaux indiquant la position angulaire du rotor (2), ledit capteur (34) étant monté sur une plaque de support (3) connectée à la carte de circuit imprimé (30) susmentionnée et s'étendant parallèle à l'axe (A-A) du rotor (2) jusqu'à une zone proche dudit aimant (5).

9. Machine électrique selon l'une quelconque des revendications précédentes, dans laquelle le stator (3) comprend une structure de support (7) comprenant un élément de forme tubulaire (9) coaxial à l'axe de rotation du rotor (2) et dans lequel le rotor (2) comprend un axe (6) qui s'étend d'une manière saillante dans ledit élément de forme tubulaire (9) de la structure de support (7) du stator (3), supporté à rotation par au moins une bague (14; 15) ou un dispositif de support similaire.
